# EUROPEAN PATENT APPLICATION

(11) **EP 3 970 966 A1**
(43) Date of publication of application: **23.03.2022**
(21) Application number: 19942345.0
(22) Date of filing: 17.09.2019
(51) Int. Cl.: B32B 27/00

(54) **POLYMER MATERIAL AND METHOD FOR PRODUCING SAME**

(30) Priority: 16.08.2019 RU 2019125917
(71) Applicant: Forpet S.A.R.L., 1511 Luxembourg (LU)
(72) Inventor: RASTORGUEV, Dmitrii Sergeevich, Moscow, 123154 (RU); NIKITENKO, Sergei Sergeevich, oblast, 141406 (RU); TSIRKULEV, Mikhail Valerevich, Moscow, 109544 (RU)
(74) Representative: Spengler, Robert
(86) International application number: PCT/RU2019/000643
(87) International publication number: WO 2021/034216

(57) **Abstract**

A polymer material consists of expanded polyethylene terephthalate with a density of 30 kg/m3 to 750 kg/m3 and an intrinsic viscosity of 0.5 dl/g to 1.0 dl/g. Polyethylene terephthalate granules with an intrinsic viscosity ranging from 0.5 dl/g to 1.0 dl/g which are produced from polyethylene terephthalate waste products or virgin polyethylene terephthalate are dried to a moisture content of 50 to 7000 ppm, then loaded into a dosing hopper of an extruder where said material is mixed with dyes or processing aids. The polyethylene terephthalate is then extruded while simultaneously feeding nitrogen or carbon dioxide or isopentane or n-pentane or freon or mixtures thereof into a connector upstream of the die. In the die and at the outlet from the die, temperature- and pressure-controllable expansion of the polyethylene terephthalate melt is carried out to a density ranging from 30 kg/m3 to 750 kg/m3. The melt from the die is fed onto calender rolls where said melt is cooled and calendered to a thickness of 500 to 25,000 µm, and then scored (creased) and cut into separate sheets. The result achieved is moisture resistance and a high recycling rate.

## Description

### TECHNICAL FIELD OF THE INVENTION

The invention relates to materials intended for accommodation, storage and transportation of products for various purpose. Furthermore, the material according to the invention can be used for sealing, laying and reinforcement. The invention can be used in the fields of industry or trade and is a more reliable replacement of corrugated cardboard.

### BACKGROUND OF THE INVENTION

The prior art discloses solutions for a corrugated material, which consist of layers of cardboard and/or paper and a layer (layers) of corrugated cardboard or paper (mandatory layers) and are mainly implemented as follows: the cardboard or paper is passed between corrugating gear rolls heated to 150-180°C, then aligned and glued to a flat cardboard or paper, and subjected to subsequent drying, cutting and creasing (scoring). Such solutions include the material developed and patented in 1856 in the United Kingdom. As we understand it today, the corrugated cardboard was patented fifteen years later, on December 20, 1871, by American Albert Jones from New York. It was a two-layer corrugated cardboard: the cardboard without one of the flat layers. A first corrugated-cardboard production apparatus was built in 1874 - since then the mass production began, gradually spread throughout the world. In the same year, a three-layer corrugated cardboard was produced. The largest manufacturers are as follows:
https://www.westrock.com/en/products/containerboard;
https://www.storaenso.com/en/products/packaging-solutions/corrugated-packaging;
http://www.intemationalpaper.com/products/europe-middle-east-africa/corrugated-packaging;
https://www.mondigroup.com/en/products-and-solutions/corrugated-packaging/;
https://www.ilimgroup.ru/produktsiva/gofroupakovka/;
https://nkbk.ru/products/gofrokarton/.

The disadvantages of the known solution include: the deterioration of the strength characteristics of the corrugated cardboard along the corrugated waves of the cardboard or paper due to the unidirectionality of the layer of corrugated cardboard or paper; the finiteness of cardboard and/or paper recycling cycles; the lack of resistance to water and moisture, as well as the use of many liquid chemicals; the possibility of appearing and developing a pathogen medium and mold on/in the material of such a packaging; the increased flammability and combustibleness of the packaging consisting of this material; the use of a significant amount of this type of material and the packaging made thereof leads to the destruction of global forest resources, an increase in the content of carbon dioxide in the air, as well as harms the planet ecosystem.

### SUMMARY OF THE INVENTION

The objective set by the author of a novel polymer material is to eliminate the disadvantages of the prior art analogues. The technical result lies in the creation of the polymer material based on expanded polyethylene terephthalate, which is resistant to moisture and exhibits a high recycling rate. This technical result is achieved by the set of essential features.

The essence of the invention is that the polymer material consists of expanded polyethylene terephthalate having a density ranging from 30 kg/m³ to 750 kg/m³ and an intrinsic viscosity ranging from 0.5 dl/g to 1.0 dl/g from the neat PET. The thickness of the expanded polyethylene terephthalate ranges from 500 µm to 25000 µm. Furthermore, to increase its mechanical strength, the expanded polyethylene terephthalate may have a wavy surface. At the same time, one side of the expanded polyethylene terephthalate is coated with a layer of polyethylene or polyethylene copolymer, or extrusion-cast polyethylene terephthalate, or polyethylene terephthalate copolymer by means its partial melting and due to surface tensions of the materials. Such a layer has a thickness ranging from 10 µm to 50 µm. A method for producing the polymer material is performed as follows. Polyethylene terephthalate granules, which have an intrinsic viscosity ranging from 0.5 dl/g to 1.0 dl/g and are produced based on polyethylene terephthalate wastes or primary polyethylene terephthalate, are dried to a moisture content of 0.005% to 0.7%. Then, the polyethylene terephthalate is loaded into a material dosing and feeding device of an extruder, in which the material is mixed with dyes or processing aids. The polyethylene terephthalate is then extruded, while simultaneously feeding nitrogen or carbon dioxide or isopentane, or n-pentane, or freon (Freon^{™} 134a or 142a, or 152a), or mixtures thereof. In a connector provided in front of a die, in the die and at the outlet of the die, the temperature- and pressure-controllable expansion of the polyethylene terephthalate melt is performed to achieve a density ranging from 30 kg/m³ to 750 kg/m³. The melt is further fed from the die onto calender rolls, where the melt is cooled and calendered to a thickness of 500 µm to 25000 µm, and then subjected to creasing and cut into separate sheets. Furthermore, when using the polyethylene terephthalate wastes, they are preliminarily washed and purified from contaminations, then crushed to fractions having a size of 1 mm to 20 mm, and separated by polymer type and color, whereupon the separated polyethylene terephthalate wastes are loaded into an extruder hopper and melted. Next, the polyethylene terephthalate melt is extruded on an extrusion line by using the extruder, while removing excess contaminations and moisture by using vacuum pumps. After that, the polyethylene terephthalate is subjected to liquid-state polycondensation in a reactor under the action of the vacuum pumps to obtain the polyethylene terephthalate granules having an intrinsic viscosity ranging from 0.5 dl/g to 1.0 dl/g. At the same time, one side of the expanded polyethylene terephthalate is coated, upon said calendering, with a printed layer by means of rotogravure or offset, or flexographic printing, or any combination thereof. At the same time, bottles, fibers, filaments, sprues, flakes are used as the polyethylene terephthalate wastes. At the same time, when calendering the expanded polyethylene terephthalate leaving the die, a corrugated calender roll is used, by which the wavy surface is formed on one side of the expanded polyethylene terephthalate, and another calender roll in the roll pair is made smooth or provided with a relief. Furthermore, the layer of polyethylene or polyethylene copolymer, or extrusion-cast polyethylene terephthalate, or polyethylene terephthalate, or polyethylene terephthalate copolymer is applied on the outdoor side of the material by using an extrusion-casting method.

### BRIEF DESCRIPTION OF THE DRAWINGS

The invention is explained by means of the drawings, in which:

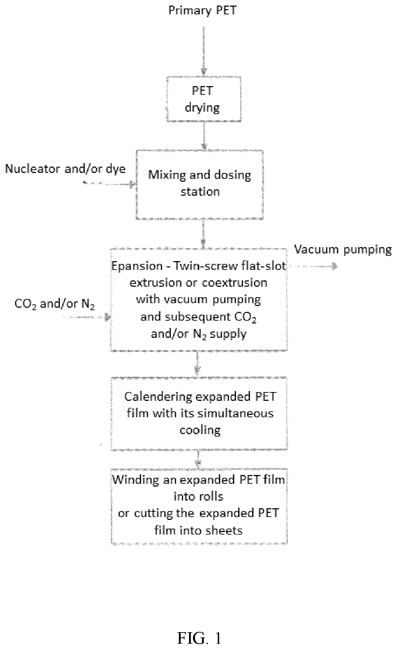

FIG. 1 schematically shows a process of producing an expanded polyethylene terephthalate (PET) film/sheet based on primary PET;

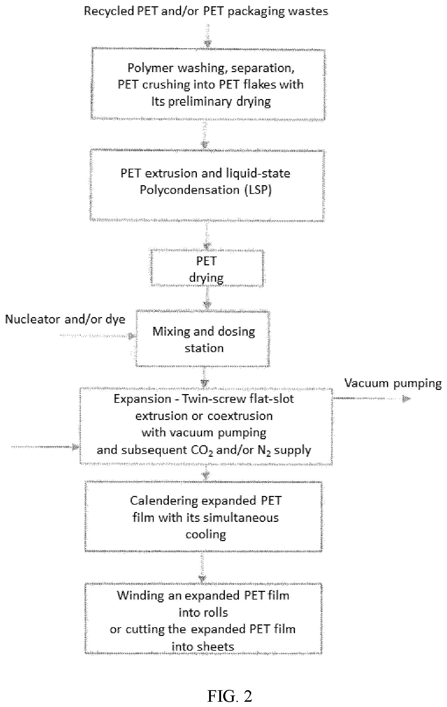

FIG. 2 schematically shows a process of producing an expanded recycled PET film/sheet based on PET packaging wastes and/or recycled PET (bottles, fibers, filaments, sprues, PET flakes) by using a PET liquid-state polycondensation method;
FIG. 3 shows a liquid-state polycondensation process for PET;
FIG. 4 shows a structure of expanded recycled PET;
FIG. 5 shows a structure of expanded recycled PET having a creasing (scoring);

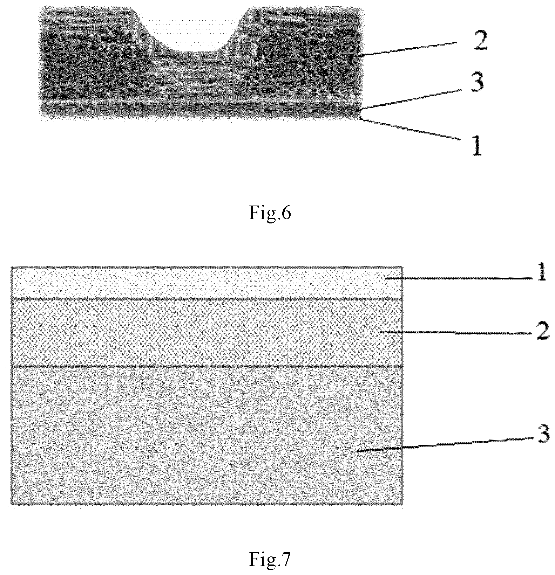

FIG. 6 shows a structure of expanded recycled PET having a creasing (scoring) and a coextrusion (CoEx) or extrusion-cast layer of non-expanded recycled PET;
FIG. 7 schematically shows one of embodiments of the claimed material;
FIG. 8 schematically shows an embodiment of the claimed material with unidirectional waves that are similar to waves of corrugated cardboard (fluting);
FIG. 9 schematically shows an embodiment of the claimed material having waves directed perpendicular to each other to provide increased strength.

### DETAILED DESCRIPTION OF THE INVENTION

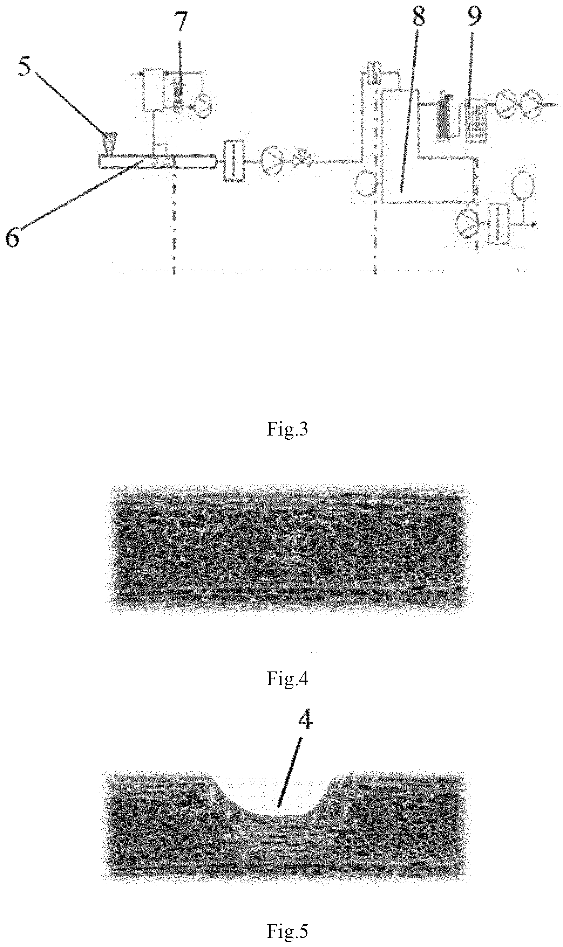

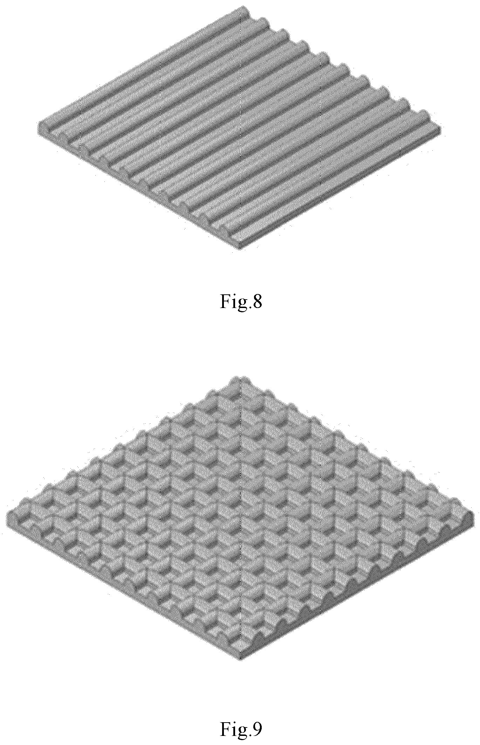

A polymeric material based on expanded polyethylene terephthalate includes an optional printed layer 1 and a mandatory base layer 2 of expanded polyethylene terephthalate. It is possible to use an additional layer 3. The additional layer 3 consists of polyethylene or polyethylene copolymer, or extrusion-cast polyethylene terephthalate, or polyethylene terephthalate copolymer. The additional layer 3 is needed for better application of printed information and used as an additional reinforcing layer that increases a number of bending-unbending in the place of creasing. The additional layer 3 has a thickness ranging from 10 µm to 50 µm. It is applied on the layer 2 of expanded polyethylene terephthalate by using a coextrusion (CoEx) and/or extrusion-casting method and is attached thereon by partly mixing and/or melting the layer 2 of expanded polyethylene terephthalate and due to surface tensions of the materials. The layer 2 of expanded polyethylene terephthalate serves as a main supporting carrier layer. The printed layer 1 is an information layer applied on the outside of the layer 2 of expanded polyethylene terephthalate or on the outer side of the layer 3. The printed layer 1 is configured to accommodate various kinds of consumer-intended information and images. The printed layer 1 may be made by using rotogravure printing or offset printing, or flexographic printing, or any combination thereof, and applied on the layer 3 or the layer 2 of expanded polyethylene terephthalate. The printed layer 1 may be also made of preliminarily printed and glued self-adhesive stickers, labels and etc. The layer 2 of expanded polyethylene terephthalate may be made of polyethylene terephthalate wastes that have passed the following recycling steps: - washing and purifying the polyethylene terephthalate wastes; - crushing and separating the polyethylene terephthalate wastes by polymer types and colors; - extruding a polyethylene terephthalate melt; - performing the liquid-state polycondensation of polyethylene terephthalate. The liquid-state polycondensation of polyethylene terephthalate is based on the inherent capacity of polyethylene terephthalate to condense in a molten state under vacuum. The condensation leads to an increase in an intrinsic viscosity. High-efficiency vacuum effectively removes harmful chemical contaminants from the material, thereby making it possible for the recycled material to be used for 100%-safe contact with food products. As the polyethylene terephthalate melt flows into the vertical portion of P:REACT (LSP reactor), filaments are formed, which form a corresponding surface in volumetric relation. The material is then collected in a horizontal drum and slowly moved forward. The condensation process begins immediately after the formation of the filaments and continues until the polyethylene terephthalate leaves the LSP reactor. An increase in the intrinsic viscosity is controlled by the residence time and degree of vacuum of the polyethylene terephthalate melt in the LSP reactor and may therefore be set to a desired level. Parameter settings allow a control unit to maintain a predetermined intrinsic viscosity level within a narrow tolerance range. The process of removing impurities is very effective as it is performed in the liquid state of polyethylene terephthalate. Not only the purification efficiency of the material that exceeds the limits set by food industry standards is provided, but also lubricants are effectively removed from the fibers during the purification process. An increase in the intrinsic viscosity may be measured at a level of about 0.01 dl/g per minute. The continuous operation of the LSP reactor provides a narrow intrinsic viscosity range of a granulate, which is suitable for high-end applications, such as fiber spinning or the production of sheets by extrusion. Fluctuations in the intrinsic viscosity during the mass production are simply ruled out. The separation of harmful impurities, such as lubricants or substances not intended for contact with food products, is performed under high-effective vacuum. The high removal rate of the impurities allows the LSP reactor to be utilized in a variety of applications, providing its high operational flexibility. The favorable conditions created in the LSP reactor (temperature/a melt surface-volume ratio/high-efficiency vacuum) allows the PET condensation process to be freely initiated. This leads to an increase in the intrinsic viscosity by about 0.01 dl/g per minute. Faster response times translate into faster achievement of required results and higher profitability. Due to its cellular structure, the layer 2 of expanded polyethylene terephthalate allows one to perform the operation of applying a rectilinear groove - creasing (scoring) 4 (as shown in FIG. 5). The creasing 4 retains its shape due to the partial destruction of the partitions between the voids of the bubbles formed during the expansion of polyethylene terephthalate. The layer 2 of expanded polyethylene terephthalate retains a sufficient strength, so that it may withstand repeated bending-unbending cycles in the place of the creasing 4. The layer 2 of expanded polyethylene terephthalate is provided with a density ranging from 30 kg/m³ to 750 kg/m³, an intrinsic viscosity (IV) ranging from 0.5 dl/g to 1.0 dl/g. The thickness of the layer 2 of expanded polyethylene terephthalate is provided in the range from 500 µm to 25000 µm. These parameters of the layer 2 of expanded polyethylene terephthalate allow the claimed material to have a stiffness similar to that of the corrugated cardboard consisting of a corrugated cardboard/paper layer and two smooth paper/cardboard layers glued thereto. This condition is achieved due to the presence of a large number of multidirectional partitions for the bubbles. The specific density range of the material is from 30 kg/m³ to 750 kg/m³. With such expansion, the resulting structure is reinforced with the multidirectional partitions of the bubbles, which are created during the expansion, but polyethylene terephthalate is a much stronger material. To provide an additional strength, in a specific embodiment, the layer 2 of expanded polyethylene terephthalate is configured to have unidirectional waves like the waves of the corrugated cardboard (fluting) (as shown in FIG. 8). These waves are formed in the process of calendering the expanded polyethylene terephthalate leaving the die, namely when it passes through a pair of calender rolls, one of which is smooth and another of which has a wavy relief and is used to form a wavy surface on one side of the expanded polyethylene terephthalate. To provide an additional, even greater strength, in a specific embodiment, the layer 2 of expanded polyethylene terephthalate is configured to have bidirectional perpendicular waves (as shown in FIG. 9). The waves are formed in the process of calendering the expanded polyethylene terephthalate leaving the die, namely when it passes between two calender rolls, one of which is smooth and another of which is a specially designed calender roll that has a relief of bidirectional perpendicular waves and is used to form a required surface on one side of the expanded polyethylene terephthalate.

The method of producing the polymeric material is as follows. At first, the layer 2 of expanded polyethylene terephthalate is made. For this, in case of using recycled polyethylene terephthalate, polyethylene terephthalate wastes 5 (bottles, fibers, filaments, sprues, polyethylene terephthalate flakes) is washed and purified from contaminations, labels, glue. Then, the polyethylene terephthalate wastes are crushed to fractions having a size of 1 mm to 20 mm and separated by polymer types and color. Next, the separated polyethylene terephthalate wastes are loaded into a hopper of an extruder 6 and melted, and the extrusion of the polyethylene terephthalate melt is performed on the extrusion line by using the extruder 6, while removing excess contaminants and moisture by using vacuum pumps 7. After that, the liquid-state polycondensation of the polyethylene terephthalate is performed in a reactor 8 under the action of vacuum pumps 9. The condensation leads to an increase in the intrinsic viscosity. High-efficiency vacuum effectively removes harmful chemical contaminants from the material, making it possible for the recycled material to be used for 100%-safe contact with food products. As the PET melt enters the vertical portion of the reactor P:REACT (LSP reactor) 8, filaments are formed, which form a corresponding surface in volumetric relation. The material is then collected in a horizontal drum and slowly moved forward. The condensation process begins immediately after the formation of the filaments and continues until the PET leaves the LSP reactor. The increase in the intrinsic viscosity is controlled by the residence time of the PET melt in the apparatus and the degree of vacuum in the LSP reactor and therefore may be set to a desired level. Parameter settings allow a control unit to maintain a predetermined intrinsic viscosity level within a narrow tolerance range. The process of removing impurities is very effective as it is performed in the liquid state of PET. Not only the purification efficiency of the material which exceed the limits set by food industry standards is provided, but also lubricants are effectively removed from the fibers during the purification process. The increase in the intrinsic viscosity may be measured at a level of about 0.01 dl/g per minute. The continuous operation of the LSP reactor provides a narrow intrinsic viscosity range of a granulate, which is suitable for high-end applications, such as fiber spinning or the production of sheets by extrusion. Fluctuations in the intrinsic viscosity during the mass production are simply ruled out. The separation of harmful impurities, such as lubricants or substances not intended for contact with food products, is performed by the vacuum pumps 9. The high removal rate of the impurities allows the LSP reactor to be utilized in a variety of applications, thereby providing its high operational flexibility. The favorable conditions created in the LSP reactor (temperature/a melt surface-to-volume ratio/high-efficiency vacuum) allows the PET condensation process to be freely initiated. This leads to an increase in the intrinsic viscosity by about 0.01 dl/g per minute. Faster response times translate into faster achievement of required results and higher profitability. Polyethylene terephthalate granules are produced at the outlet of the LSP unit. Then, the polyethylene terephthalate granules obtained based on the polyethylene terephthalate wastes or primary polyethylene terephthalate are dried to a moisture content ranging from 0.005% to 0.7% (from 50 ppm to 7000 ppm). Further, the polyethylene terephthalate is loaded into a material dosing and feeding device of the extruder, where it is mixed with dyes or processing additives for the purpose of its coloring and/or improving its expansion. After that, polyethylene terephthalate extrusion is performed while simultaneously supplying nitrogen or carbon dioxide, or isopentane, or n-pentane, or freon (Freon^{™} 134a, 142a, 152a), or mixtures thereof.

In a connector provided in front of the die, in the die and at the outlet of the die, the polyethylene terephthalate melt is subjected to temperature- and pressure-controllable expansion, after which the melt from the die is fed to calender rolls where it is cooled (thermostated) and calendered to a thickness of 500 µm to 25000 µm. Then, to calender the expanded polyethylene terephthalate leaving the die, a corrugated calender roll may be additionally used, with the aid of which a wavy surface is formed on one side of the expanded polyethylene terephthalate. In this case, another calender roll in the roll pair may be either smooth or provided with a relief. Further, the additional layer 3 is additionally applied on the outer side of the material by the extrusion-casting method. Next, the printed layer 1 is applied on the outer surface of the material layer or on the additional layer 3. The printed layer 1 is applied by using rotogravure printing or offset printing, or flexographic printing, or any combination thereof. The resulting material may be also used without any print. The resulting material based on the expanded polyethylene terephthalate is cut into sheets and creased (scored).

### INDUSTRIAL APPLICABILITY

The claimed invention makes it possible to: process a layer of expanded recycled polyethylene terephthalate or a CoEx (coextrusion) or extrusion-cast film/sheet consisting, similar to corrugated cardboard, of a layer of non-foamed polyethylene terephthalate and a layer of foamed recycled polyethylene terephthalate; produce its creasing (scoring) for its subsequent bending along a scoring line; perform its punching and/or perforating; and perform finishing operations (e.g., printing). The claimed invention makes it possible to: produce a material and a packaging based thereon, with the packaging consisting of a main carrier layer of expanded polyethylene terephthalate; perform the hundred-percent recycling of the used material based on the composition made of the main carrier layer of expanded polyethylene terephthalate and, in one of the embodiments, the coextrusion (CoEx) or extrusion-cast film/sheet by means of purification, crushing and subsequent liquid-state polycondensation of polyethylene terephthalate, thereby restoring the properties of polyethylene terephthalate to primary raw materials. The claimed invention makes it possible to recycle multilayer compositions comprising the main carrier layer of expanded polyethylene terephthalate as many times as one sees fit. In most cases, the claimed invention allows one to create compositions comprising a layer of expanded polyethylene terephthalate having physical and mechanical characteristics better than those of similar multilayer compositions based on cardboard and/or paper. The claimed invention is 5%-30% cheaper (Should we really need to mention it) in cost than cardboard or paper, depending on cardboard or paper brands and depending on a required expansion coefficient, and depending on the intrinsic viscosity of polyethylene terephthalate.

## Claims

1. A polymer material comprising expanded polyethylene terephthalate having a density ranging from 30 kg/m³ to 750 kg/m³ and an intrinsic viscosity ranging from 0.5 dl/g to 1.0 dl/g.

2. The polymer material according to claim 1, wherein the expanded polyethylene terephthalate has a thickness ranging from 500 µm to 25000 µm.

3. The polymer material according to claim 1, wherein the expanded polyethylene terephthalate has a wavy surface on one side.

4. The polymer material according to claim 1, wherein a layer of polyethylene or polyethylene copolymer, or extrusion-cast polyethylene terephthalate, or polyethylene terephthalate copolymer is applied on one side of the expanded polyethylene terephthalate by partly melting the expanded polyethylene terephthalate and due to surface tensions of the materials.

5. The polymer material according to claim 4, wherein the layer has a thickness ranging from 10 µm to 50 µm.

6. A method for producing a polymeric material, wherein
polyethylene terephthalate granules having an intrinsic viscosity ranging from 0.5 dl/g to 1.0 dl/g and obtained based on polyethylene terephthalate wastes or primary polyethylene terephthalate are dried to a moisture content from 0.005% to 0.7%,
the polyethylene terephthalate is further loaded into a material dosing and feeding device of an extruder where the polyethylene terephthalate is mixed with dyes or processing additives,
the polyethylene terephthalate is then extruded while simultaneously supplying nitrogen or carbon dioxide, or isopentane, or n-pentane, or freon (Freon^{™} 134a or 142a, or 152a) or mixtures thereof,
in a connector provided in front of a die, in the die and at an outlet of the die, a polyethylene terephthalate melt is subject to temperature- and pressure-controllable expansion to obtain a density ranging from 30 kg/m³ to 750 kg/m³,
after that, the melt from the die is fed onto calender rolls where the melt is cooled and calendered to a thickness of 500 µm to 25000 µm and is further subjected to creasing (scoring) and cut into separate sheets.

7. The method for producing the polymer material according to claim 6, wherein
when using the polyethylene terephthalate wastes, the polyethylene terephthalate wastes are preliminarily washed and purified from contaminants, then crushed to fractions having a size from 1 mm to 20 mm, and separated by polymer types and color,
then, the separated polyethylene terephthalate wastes are loaded into a hopper of the extruder and melted,
a polyethylene terephthalate melt is performed on an extrusion line by using the extruder, while removing excess contaminations and moisture by using vacuum pumps,
then, liquid-state polycondensation is performed for the polyethylene terephthalate in a reactor by using vacuum pumps to obtain polyethylene terephthalate granules having an intrinsic viscosity ranging from 0.5 dl/g to 1.0 dl/g.

8. The method for producing the polymer material according to claim 6, wherein freon (Freon^{™} 134a or 142a, or 152a) or a mixture thereof is used.

9. The method for producing the polymer material according to claim 6, wherein, upon said calendering, a printed layer is applied on one side of the expanded polyethylene terephthalate by using rotogravure or offset, or flexographic printing, or by any combination thereof.

10. The method for producing the polymer material according to claim 7, wherein bottles, fibers, filaments, sprues, flakes are used as the polyethylene terephthalate wastes.

11. The method for producing the polymer material according to claim 6, wherein, when calendering the expanded polyethylene terephthalate leaving the die, a corrugated calender roll is used, with the aid of which a wavy surface is formed on one side of the expanded polyethylene terephthalate, and another calender roll in a roll pair is made smooth or provided with a relief.

12. The method for producing the polymer material according to claim 6, wherein a layer of polyethylene or polyethylene copolymer, or extrusion-cast polyethylene terephthalate, or polyethylene terephthalate copolymer is applied on an outer side of the material by means of extrusion casting.
